# EUROPÄISCHE PATENTSCHRIFT

(11) **EP 3 577 745 B1**
(45) Veröffentlichungstag und Bekanntmachung des Hinweises auf die Patenterteilung: **31.03.2021**
(21) Anmeldenummer: 18707302.8
(22) Anmeldetag: 15.02.2018
(51) Int. Cl.: H02K 9/06, H02K 9/18, F04D 29/42, H02K 7/14

(54) **KÜHLUNG EINER ELEKTRISCHEN MASCHINE**
COOLING OF AN ELECTRIC MACHINE
REFROIDISSEMENT D'UNE MACHINE ÉLECTRIQUE

(30) Priorität: 09.03.2017 EP 17160141
(43) Veröffentlichungstag der Anmeldung: 11.12.2019
(73) Patentinhaber: Siemens Aktiengesellschaft, 80333 München (DE)
(72) Erfinder: ROGGINGER, Christoph, 84384 Wittibreut (DE); WEISS, Sebastian, 90522 Oberasbach (DE); WILLEMS, Patric, 92353 Postbauer-Heng (DE); WINKLER, Günther, 4785 Haibach (AT)
(86) Internationale Anmeldenummer: PCT/EP2018/053788
(87) Internationale Veröffentlichungsnummer: WO 2018/162204

(56) Entgegenhaltungen:
- DE-A1- 19 820 111
- DE-A1-102010 001 437
- DE-U1-202014 100 613
- FR-A- 1 127 714
- US-A- 4 208 599
- US-A1- 2002 141 888
- US-A1- 2015 162 805
- US-B1- 6 246 134

## Beschreibung

Die Erfindung betrifft eine Maschine mit einem Gehäuse, einem im Gehäuse drehfest angeordneten Ständer, einem in einem Aufnahmeraum des Ständers drehbar gelagerten Läufer, einer Kühleinrichtung zum Abführen von Wärme aus dem Gehäuse heraus, einem mit Kühlluft beaufschlagbaren Wärmeübertrager, der am Gehäuse angeordnet und mit der Kühleinrichtung gekoppelt ist, einem Kühlluftkanal zum Zuführen und/oder Abführen der Kühlluft, und einem Ventilator zum Einbringen der Kühlluft in den Kühlluftkanal, wobei der Ventilator ein in einem Ventilatorgehäuse drehbar antreibbar gelagertes Luftrad aufweist, wobei das Ventilatorgehäuse zwei gegenüberliegende Lufteinlassöffnungen, zwischen denen das Laufrad angeordnet ist, und wenigstens eine in einer radialen Richtung des Laufrads angeordnete Luftauslassöffnung aufweist.

Gattungsgemäße elektrische Maschinen sind dem Grunde nach im Stand der Technik umfänglich bekannt, sodass es eines gesonderten druckschriftlichen Nachweises hierfür nicht bedarf. Bei einer elektrischen Maschine, insbesondere einer rotierenden elektrischen Maschine, ist in der Regel der Ständer als Stator vorgesehen, der üblicherweise eine im Wesentlichen kreisförmige Durchgangsöffnung als Aufnahmeraum zur Aufnahme des als Rotor ausgebildeten Läufers bereitstellt. In der Durchgangsöffnung ist der Läufer drehbar gelagert angeordnet, wobei zwischen dem Läufer und dem Ständer ein Luftspalt ausgebildet ist.

Eine elektrische Maschine ist eine Vorrichtung, die elektrische Energie in mechanische Energie, insbesondere Bewegungsenergie in einem Motorbetrieb und/oder mechanische Energie in eine elektrische Energie in einem Generatorbetrieb umformt. Bei der Bewegung handelt es sich in der Regel um eine Drehbewegung, die vom Läufer ausgeführt wird. Der Ständer ist im Unterschied zum Läufer in der Regel drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment, erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weisen der Ständer und der Läufer jeweils eine von einem elektrischen Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Wechselspannungsnetz angeschlossen sind, wie beispielsweise Asynchronmaschinen, Synchronmaschinen, Synchronmaschinen mit Dämpferkäfig oder dergleichen oder auch Gleichstrommaschinen wie Nebenschluss- oder Reihenschlussmaschinen oder dergleichen.

Rotierende elektrische Maschinen weisen in der Regel ein Gehäuse auf, welches die Bestandteile der rotierenden elektrischen Maschine umschließt, zumindest jedoch den Ständer und den Läufer. Die elektrische Maschine weist in der Regel auch eine Kühleinrichtung zum Abführen der Wärme aus dem Gehäuse heraus mittels eines Kühlfluids auf. Die Kühleinrichtung kann in das Gehäuse integriert angeordnet sein. Darüber hinaus kann sie aber auch zumindest teilweise in den Ständer und/oder den Läufer integriert angeordnet sein.

Die US 2002/0141888 A1 offenbart einen doppelseitigen Radiallüfter zur Motorkühlung. Die US 2015/162805 A1 offenbart einen mit einem Lüfter Wärmeübertrager zur Motorkühlung.

Bei elektrischen Maschinen, die gegenüber einer äußeren Atmosphäre getrennt ausgebildet sein sollen, beispielsweise in dem sie hermetisch gegenüber dieser abgedichtet sind, weisen häufig eine Kühleinrichtung auf, die maschinenseitig einen geschlossenen Kühlkreislauf für das Kühlfluid bereitstellt. Das Kühlfluid kann flüssig oder auch gasförmig, insbesondere Luft, sein. Die Kühleinrichtung ist vorzugsweise an einen Wärmeübertrager angeschlossen, der vom Kühlfluid durchströmt wird. Zu diesem Zweck ist die Kühleinrichtung fluidsch mit dem Wärmeübertrager gekoppelt.

Der Wärmeübertrager weist vorzugsweise einen separaten, Fluidkanal zum Führen von Kühlluft auf, mittels dem das Kühlfluid zum Zwecke des Wärmeaustausches kontaktiert werden kann. Das Kühlfluid sowie die Kühlluft sind im Wärmeübertrager stoffschlüssig getrennt.

Damit die Kühlluft den Wärmeübertrager durchströmen kann, ist der Ventilator vorgesehen, der dem Einbringen der Kühlluft in den Kühlluftkanal dient. Der Ventilator weist ein eigenes Ventilatorgehäuse auf, in welchem ein Luftrad des Ventilators drehbar und antreibbar gelagert ist. Das Ventilatorgehäuse weist darüber hinaus zwei gegenüberliegende Lufteinlassöffnungen, zwischen denen das Luftrad angeordnet ist, und wenigstens eine in einer radialen Richtung des Luftrads angeordnete Luftauslassöffnung auf. Das Luftrad ist in der Regel derart angeordnet, dass eine Rotationsachse des Luftrades quer zu einer durch die beiden gegenüberliegenden Lufteinlassöffnungen gebildeten Ebene ausgerichtet ist.

Auch wenn sich dieser Stand der Technik dem Grunde nach bewährt hat, so zeigen sich dennoch Nachteile. Im bestimmungsgemäßen Betrieb der elektrischen Maschine treten aufgrund des Betriebs des Ventilators Geräusche auf, die je nach Betriebszustand der elektrischen Maschine sehr störend sein können.

Der Erfindung liegt die Aufgabe zugrunde, bezüglich der Geräuschentwicklung der elektrischen Maschine eine Verbesserung zu bewirken.

Als Lösung wird mit der Erfindung eine elektrische Maschine gemäß dem unabhängigen Anspruch 1 vorgeschlagen. Vorteilhafte Weiterbildungen ergeben sich anhand von Merkmalen der abhängigen Ansprüche.

Für eine gattungsgemäße elektrische Maschine wird mit der Erfindung insbesondere vorgeschlagen, wenigstens eine der beiden Lufteinlassöffnungen zumindest bereichsweise nach Art einer Düse ausgebildet ist.

Die Erfindung basiert auf der Erkenntnis, dass durch die Ausgestaltung der Lufteinlassöffnung nach Art einer Düse die Luftströmung in den Ventilator hinein verbessert werden kann, sodass eine günstigere Luftströmung insgesamt erreicht und dadurch auch eine Geräuschentwicklung reduziert werden kann. Dabei basiert die Erfindung ferner auf dem Gedanken, dass gerade an der Lufteinlassöffnung eine Maßnahme zur Geräuschreduktion besonders günstig ist, zumal dort auch das Luftrad angeordnet ist, welches seinerseits ebenfalls die Luftströmung beeinflusst. Durch die Ausgestaltung der Lufteinlassöffnung nach Art einer Düse kann ein günstigeres Anströmverhalten der Kühlluft in Bezug auf das Luftrad erreicht werden, sodass insgesamt eine Geräuschreduktion erreicht werden kann.

Dadurch kann mit der Erfindung auch erreicht werden, dass bei elektrischen Maschinen eine hohe Ausnutzung in Bezug auf die Kühlleistung bereitgestellt werden kann, die in der Regel eine sehr effiziente Kühlung benötigt. Bei großen elektrischen Maschinen wird dies mittels des Wärmeübertragers erreicht. Hier kommen hauptsächlich zwei Varianten zum Einsatz, nämlich eine Rückkühlung mittels Luft-Wasser-Wärmekoppler sowie eine Rückkühlung mittels Luft-Luft-Wärmeübertrager. Auch wenn im Folgenden die Anwendung eines Luft-Luft-Wärmeübertragers zugrundegelegt wird, ist das Funktionsprinzip der Erfindung grundsätzlich auch auf einen Luft-Wasser-Wärmeübertrager entsprechend anwendbar.

Bei einem Luft-Luft-Wärmeübertrager wird eine als Kühlfluid dienende Innenluft innerhalb des Gehäuses der elektrischen Maschine mit einem beispielsweise Röhrenwärmeübertrager rückgekühlt. Hierzu ist es erforderlich, Kühlluft durch Kühlrohre des Wärmeübertragers zu führen, um die Wärme aus dem Wärmeübertrager abführen zu können. Üblicherweise wird Umgebungsluft als Kühlluft genutzt. Dem Grunde nach kann jedoch auch ein anderes geeignetes fluides Kühlmittel hierfür eingesetzt werden. Durch die Kühlrohre des Wärmeübertragers wird eine stoffliche Trennung zwischen den dem Kühlfluid und der Kühlluft gewährleistet. Der maschineninterne Luftstrom entspricht somit dem Kühlfluid der Kühleinrichtung, wohingegen die Umgebungsluft der Kühlluft entspricht.

Um die Förderung der Umgebungsluft zum Wärmeübertrager zu ermöglichen, ist eine technische Luftfördereinrichtung erforderlich. Diese wird vorliegend durch einen Luftkanal mit einem Ventilator bereitgestellt. Diese Luftfördereinrichtung stellt im bestimmungsgemäßen Betrieb der elektrischen Maschine eine nicht unerhebliche Geräuschemissionsquelle dar. Üblicherweise ist der Ventilator über den Läufer der elektrischen Maschine angetrieben, beispielsweise indem das Luftrad an einer Läuferwelle befestigt ist und sich im bestimmungsgemäßen Betrieb mit dieser mitdreht. Durch die Erfindung ist es nunmehr möglich, die Geräuschemission des Ventilators deutlich zu reduzieren.

Für elektrische Maschinen, die überwiegend in einem oberen Drehzahlbereich mit nur einer Drehrichtung betrieben werden, erweist sich eine sogenannte eigenbelüftete Luftfördereinrichtung als vorteilhaft. Da bei dieser Ausgestaltung keine separate elektrische Antriebseinheit für den Ventilator, insbesondere dessen Luftrad erforderlich ist, ist auch die Zuverlässigkeit dieser elektrischen Maschine erhöht, weil eine zusätzliche technische Baugruppe in Form der Antriebseinheit eingespart werden kann. Bei der eigenbelüfteten Luftfördereinrichtung wird vorzugsweise eine Nichtantriebsseite des Läufers beziehungsweise einer Läuferwelle des Läufers genutzt, welches nicht-antriebsseitige Wellenende aus der elektrischen Maschine beziehungsweise dem Gehäuse der elektrischen Maschine herausgeführt ist und für den Antrieb des Luftrades genutzt werden kann. Das Luftrad selbst kann nach Art eines Radial- oder auch eines Axialluftrads ausgebildet sein und entsprechende Luftschaufeln aufweisen.

Für die eigenbelüftete Luftfördereinrichtung kommt aufgrund des Wartungsaufwandes und der Verbesserung der Zuverlässigkeit der elektrischen Maschine ein Übersetzungsgetriebe, welches eine Kopplung des Luftrades mit dem Wellenende der Läuferwelle herstellen könnte, in der Regel nicht in Frage. Aus diesem Grund ist das Luftrad bei einer eigenbelüfteten Luftfördereinrichtung in der Regel auf eine Betriebsdrehzahl der elektrischen Maschine im bestimmungsgemäßen Betrieb ausgelegt, weil es vorzugsweise unmittelbar von der Läuferwelle angetrieben wird.

Ein Axialluftrad ist zwar geeignet, einen vergleichsweise großen Volumenstrom an Kühlluft zu fördern, jedoch erweist es sich dabei als nachteilig, dass, um einen hohen Gegendruck überwinden zu können, das Luftrad entweder einen großen Durchmesser aufweisen und/oder bei einer hohen Drehzahl betrieben werden muss. Dabei zeigt sich insbesondere der Nachteil, dass die Geräuschentwicklung durch ein Axialluftrad mit dessen Größe in Bezug auf den Durchmesser und seiner Betriebsdrehzahl steigt. Darüber hinaus ist zu bedenken, dass der Betrieb eines Axialluftrades eine axiale Kraft in Bezug auf die Läuferwelle auf diese überträgt. Insbesondere bei schwimmend gleitgelagerten Läuferwellen können hierbei zulässige Grenzwerte schnell überschritten werden.

Weiterhin erweist es sich als nachteilig, dass bei modular aufgebauten elektrischen Maschinen mit einer Kühleinrichtung, die einen Innenumluftkühlkreislauf aufweisen, bauartbedingt der Luftstrom der Kühlluft unmittelbar nach Austreten aus dem Axialventilator um etwa 90° umgelenkt werden muss.

Dies ist zwar bei Radialventilatoren nicht erforderlich, jedoch kommt ein Radialluftrad mit entsprechend großem Durchmesser bei einer großen Betriebsdrehzahl schnell an Festigkeits- und/oder Stabilitätsgrenzen. Darüber hinaus ist zu beachten, dass einflutige Radiallufträder zudem ebenfalls wie Axiallufträder nicht frei von einer axialen Kraftübertragung auf die Läuferwelle sind. Gleichwohl steht dem als Vorteil entgegen, dass der Radialventilator eine deutlich höhere Druckerzeugung im Vergleich zu einem entsprechend leistungsfähigen Axialventilator ermöglicht. Dabei erweist sich jedoch die Volumenstrombegrenzung durch die Größe einer Ansaugöffnung beziehungsweise Lufteinlassöffnung des Radialventilators als nachteilig, die ihrerseits von einem Durchmesser des Luftrads abhängt und somit drehzahlbegrenzend wirkt. Bei hohen Volumenströmen ist deshalb zwangsläufig ein Radialventilator mit einem großen Durchmesser, das heißt, großen mechanischen Abmessungen erforderlich, ohne dass der erforderliche große Druck benötigt wird, den der Radialventilator zu erzeugen im Stande ist. Dann besteht jedoch das Problem, dass der Radialventilator in einem ungünstigen Betriebszustand betrieben werden kann, woraus sich ein ungünstiger Wirkungsgrad und - wegen des großen Durchmessers - eine entsprechend hohe Geräuschentwicklung ergeben kann. Aus diesem Grund ist bei der Erfindung vorgesehen, dass der Ventilator zwei gegenüberliegende Lufteinlassöffnungen aufweist. Dadurch können die vorgeschriebenen Probleme bezüglich des Radialventilators vermieden, zumindest jedoch reduziert werden. Es wird somit ein zweiflutiger Ventilator bereitgestellt, das heißt, ein Ventilator, dessen Ventilatorgehäuse zwei gegenüberliegende Lufteinlassöffnungen aufweist.

Die Erfindung basiert darauf, dass ein zweiflutiger Ventilator, vorzugsweise als Wellenventilator, eingesetzt wird. Insbesondere kann vorgesehen sein, dass eine der beiden Lufteinlassöffnungen einen Luftansaugweg in einem Raum zwischen einem Luftführungskasten und einem nicht-antriebsseitigen Lagerschild der elektrischen Maschine angeordnet ist.

Ist das Luftrad im Wesentlichen bezüglich der Luftansaugung symmetrisch aufgebaut, kann ferner erreicht werden, dass auf eine Antriebseinheit für das Luftrad, beispielsweise die Läuferwelle, im Wesentlichen keine axialen Kräfte ausgeübt werden. Ferner ist es möglich, den Durchmesser des Luftrades bei elektrischen Maschinen, die für hohe Drehzahlen ausgebildet sind, auch bei großen Volumenströmen für die Kühlluft klein zu halten. Dadurch können bessere Wirkungsgrade solcher Ventilatoren erreicht werden, wobei zugleich Geräuschemissionen reduziert werden können.

Es kann ferner vorgesehen sein, dass sich in Strömungsrichtung an den nach Art einer Düse ausgebildeten Bereich ein nach Art eines Diffusors ausgebildeter Bereich anschließt. Dadurch ist es möglich, eine weitere Verbesserung in Bezug auf die Strömung der Kühlluft erreichen zu können. Insbesondere kann ein Übergang der Strömung der Kühlluft von der Lufteinlassöffnung zum Luftrad verbessert werden. Dadurch kann sowohl der Wirkungsgrad erhöht, als auch die Geräuschentwicklung weiter reduziert werden.

Besonders vorteilhaft erweist es sich, wenn in Strömungsrichtung vor der wenigstens einen der beiden Lufteinlassöffnungen eine Schalldämmwand ausgebildet ist. Mit der Schalldämmwand kann eine weitere Reduzierung der Geräuschemission erreicht werden. Die Schalldämmwand ermöglicht es, eine direkte Schallemission durch die Lufteinlassöffnung zu reduzieren beziehungsweise zu vermeiden. Durch die Lufteinlassöffnung austretende Geräusche können dadurch besser gedämpft werden.

Die Schalldämmwand kann ein separates Bauteil sein, welches im Bereich der Lufteinlassöffnung mit einem ausreichenden Abstand angeordnet ist, sodass die Luftströmung der Kühlluft im Wesentlichen nicht behindert wird. Die Schalldämmwand kann insbesondere zumindest ein Teil des Ventilatorgehäuses oder auch des Gehäuses der elektrischen Maschine sein. Die Schalldämmwand kann aus Metall, Keramik, Kunststoff, einem Verbundwerkstoff und/oder dergleichen gebildet sein. Darüber hinaus besteht die Möglichkeit, dass die Schalldämmwand zumindest lufteinlassöffnungsseitig eine Oberflächenstruktur aufweist, die es erlaubt, Geräusche zu reduzieren. Die Oberflächenstruktur ist vorzugsweise hinsichtlich ihrer Abmessungen an einen Frequenzbereich der Geräuschemission durch die Lufteinlassöffnung angepasst ausgebildet. Dadurch kann eine gute Dämpfung der Geräuschemission erreicht werden. Die Oberflächenstruktur kann beispielsweise Waben, Röhren, Kombinationen hiervon und/oder dergleichen aufweisen.

Die Schalldämmwand kann zum Beispiel als eine dünne Wand ausgebildet sein, die vorzugsweise im Wesentlichen parallel zu einer Ebene, in der die Lufteinlassöffnung liegt, ausgebildet ist. Darüber hinaus besteht natürlich die Möglichkeit, dass die Schalldämmwand schräg gegenüber dieser Ebene ausgebildet beziehungsweise angeordnet ist. Die Schalldämmwand braucht keine Ebene in der Fläche darzustellen, sondern sie kann auch gekrümmt ausgebildet sein, zum Beispiel einen oder mehrere Knicke aufweisen und/oder dergleichen. Abmessungen der Schalldämmwand sind vorzugsweise derart gewählt, dass Abmessungen der Lufteinlassöffnung überragt sind. Die Abmessungen der Schalldämmwand können darüber hinaus auch abhängig von einer Entfernung der Schalldämmwand zur Lufteinlassöffnung sein. So kann vorgesehen sein, dass die Abmessungen mit zunehmendem Abstand der Schalldämmwand von der Lufteinlassöffnung größer gewählt sind.

Darüber hinaus wird vorgeschlagen, dass die Schalldämmwand zumindest lufteinlassöffnungsseitig ein Schalldämmmaterial aufweist. Das Schalldämmmaterial kann einstückig mit der Schalldämmwand ausgebildet sein. Es kann beispielsweise als Beschichtung auf der der Lufteinlassöffnung zugewandten Oberfläche der Schalldämmwand angeordnet sein. Das Schalldämmmaterial kann beispielsweise mittels Kleben, Befestigungsmitteln wie Nägeln, Nieten und/oder dergleichen, Spannen und oder dergleichen an der Schalldämmwand befestigt sein. Das Schalldämmmaterial kann zum Beispiel einen Faserwerkstoff, der beispielsweise Keramikfasern nutzt, aber auch Steinwolle, Glaswolle, Stahlwolle, Kombinationen hiervon und/oder dergleichen umfassen. Darüber hinaus kann das Schalldämmmaterial natürlich auch einen Kunststoff umfassen, insbesondere einen aufgeschäumten Kunststoff, der darüber hinaus auch mit Fasern verstärkt sein kann.

Schließlich wird vorgeschlagen, dass das Luftrad nach Art eines Radialventilators ausgebildet ist und einen nach Art eines Diffusors ausgebildeten Bereich aufweist, der sich in Strömungsrichtung an die wenigstens eine, zumindest bereichsweise nach Art einer Düse ausgebildete der beiden Lufteinlassöffnungen anschließt. Dadurch ist es möglich, dass ein Strömungsübergang von der Lufteinlassöffnung zum Luftrad besser angepasst werden kann. Dies erlaubt es, nicht nur den Wirkungsgrad des Ventilators zu erhöhen, sondern auch die Geräuschentwicklung weiter zu reduzieren.

Weitere Vorteile und Merkmale sind der folgenden Beschreibung von Ausführungsbeispielen anhand der beigefügten Figuren zu entnehmen. In den Figuren bezeichnen gleiche Bezugszeichen gleiche Merkmale und Funktionen.

Es zeigen:
- FIG 1: eine schematische Seitenansicht einer elektrischen Maschine mit einem Wärmeübertrager sowie mit einem einflutigen Ventilator in einer Schnittansicht,
- FIG 2: die Schnittansicht des einflutigen Ventilators in FIG 1 in einer vergrößerten Darstellung,
- FIG 3: eine schematische Darstellung wie FIG 1, wobei der Ventilator hier als zweiflutiger Ventilator ausgebildet ist,
- FIG 4: eine schematische Darstellung wie FIG 2, bei der der zweiflutige Ventilator gemäß FIG 3 vergrößert dargestellt ist, und
- FIG 5: eine schematische Darstellung wie FIG 3, bei der ergänzend Schalldämmwände vorgesehen sind.

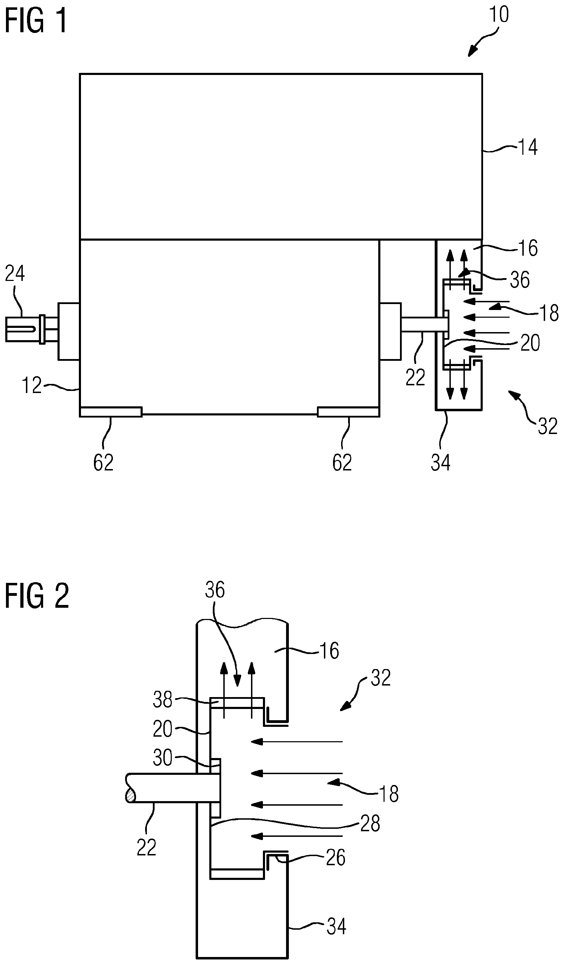

FIG 1 zeigt in einer schematischen Seitenansicht eine elektrische Maschine 10, mit einem Gehäuse 12, in dem - in den FIG nicht dargestellt - drehfest ein Ständer der elektrischen Maschine 10 angeordnet ist. Der Ständer stellt eine einen Aufnahmeraum bildende Durchgangsöffnung bereit, in der drehbar ein Läufer gelagert ist. Der Läufer weist Läuferwelle auf, die ein Antriebsende 24 sowie ein Nicht-Antriebsende 22 aufweist. Die Enden 22, 24 der Läuferwelle ragen aus dem Gehäuse 12 der elektrischen Maschine 10 heraus.

Ferner umfasst die elektrische Maschine 10 eine Kühleinrichtung zum Abführen von Wärme aus dem Gehäuse 12 heraus mittels eines Kühlfluids, welches vorliegend Luft ist. Die Kühleinrichtung stellt einen geschlossenen Kühlkreislauf bereit und ist an einen Wärmeübertrager 14 angeschlossen. Die Kühleinrichtung selbst ist in den FIG nicht dargestellt.

Der Wärmeübertrager 14 ist mit Kühlluft beaufschlagbar, die über einen Kühlluftkanal 16 von einem Ventilator 32 bereitgestellt wird. Über eine nicht weiter dargestellte Luftaustrittsöffnung wird die Kühlluft von dem Wärmeübertrager 14 an die Umgebung abgegeben.

Der Ventilator 32 weist ein in einem Ventilatorgehäuse 34 drehbar gelagertes Luftrad 20 auf, welches vorliegend als Radialluftrad ausgebildet ist. Das Ventilatorgehäuse 34 umfasst eine an einer Stirnplatte 26 angeordnete Lufteinlassöffnung 18, die vorliegend koaxial zu einer Drehachse des Luftrads 20 ausgebildet ist. In eine radiale Richtung des Luftrads 20 ist eine Luftauslassöffnung 36 ausgebildet.

FIG 2 zeigt eine vergrößerte Darstellung des Ventilators 32 in Schnittdarstellung. Zu erkennen ist, dass das Luftrad 20 an das Ende 22 der Läuferwelle angeflanscht ist, wodurch eine Ventilatornabe 30 ausgebildet und die Drehachse bestimmt sind. Das Luftrad 20 wird also unmittelbar von der elektrischen Maschine 10 selbst angetrieben. Bei dem Ventilator 32 handelt es sich somit um einen einflutigen Ventilator.

Das Luftrad 20 weist radial im Umfang angeordnete Luftschaufeln 38 auf, mittels denen die Luft in bestimmungsgemäßer Weise gefördert werden kann. Die Luftschaufeln 38 sind über eine Schottwand 28 der Ventilatornabe 30 mit dem Ende 22 der Läuferwelle mechanisch verbunden.

Die elektrische Maschine 10 ist als rotierende elektrische Maschine ausgebildet. Zum Aufstellen der elektrischen Maschine 10 weist diese Füße 62 auf, die dazu dienen, die elektrische Maschine 10 auf einem geeigneten Fundament anordnen zu können. Mit den Füßen 62 wird die elektrische Maschine 10 am Fundament befestigt.

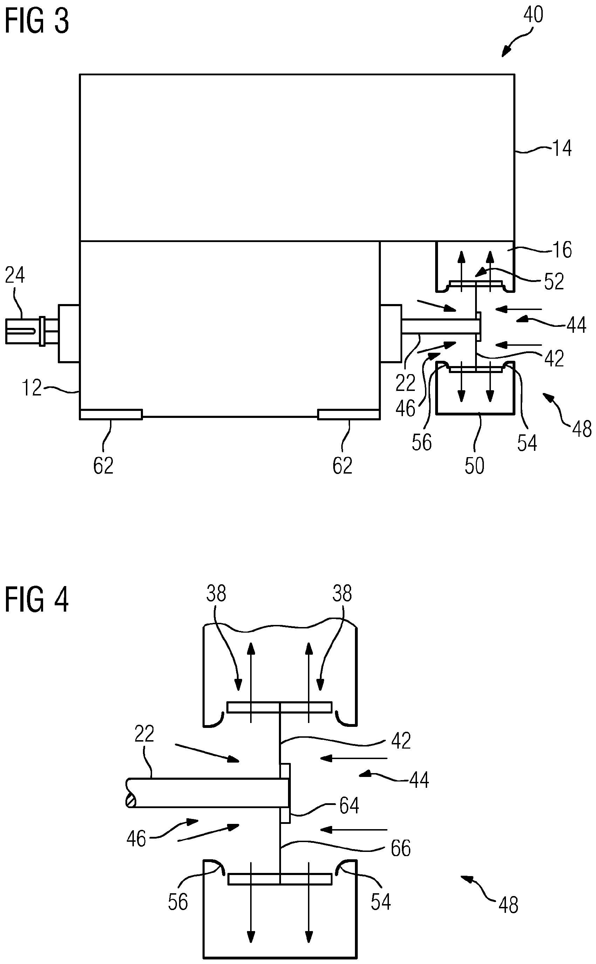

FIG 3 zeigt in einer schematischen Seitenansicht eine elektrische Maschine 40 mit einem geschnittenen Ventilator eine Darstellung wie FIG 1, jedoch nun mehr mit einem zweiflutigen Ventilator 48. Der Ventilator 48 weist ein Ventilatorgehäuse 50 auf, in dem drehbar antreibbar ein Luftrad 42 angeordnet ist. Das Luftrad 42 ist - wie bei der vorhergehenden Ausgestaltung - mit einem nicht-antriebsseitigen Ende 22 einer Läuferwelle der elektrischen Maschine 40 verbunden.

Das Ventilatorgehäuse 50 weist zwei gegenüberliegende Lufteinlassöffnungen 44, 46 auf, die vorliegend im Wesentlichen kreisrund ausgebildet sind. Zwischen den Lufteinlassöffnungen 44, 46 ist das Luftrad 42 angeordnet. Das Luftrad 42 ist vorliegend als zweiseitiges Radialluftrad ausgebildet, sodass durch beide der Lufteinlassöffnungen 44, 46 entsprechend Kühlluft angesaugt und in den bereits zu den FIG 1 und 2 erläuterten Kühlluftkanal 16 gefördert wird. Die weiteren Merkmale der elektrischen Maschine 40 entsprechen denen, wie sie bereits anhand der FIG 1 und 2 zu der elektrischen Maschine 10 erläutert worden sind, weshalb ergänzend auf dies Ausführungen Bezug genommen wird. Die Ausgestaltung gemäß FIG 3 unterscheidet sich somit von der Ausgestaltung gemäß FIG 1 lediglich durch den Ventilator 48, der vorliegend zweiflutig gegenüber dem Ventilator 32 der FIG 1 und 2 ausgebildet ist.

Auch in diesem Ausführungsbeispiel ist ventilatorseitig eine Luftauslassöffnung 52 vorgesehen, durch die vom Ventilator 48 bereitgestellte Kühlluft in den Kühlluftkanal 16 gefördert wird. Die weitere Funktion der Kühlung entspricht der, wie sie bereits zuvor erläutert wurde.

Vorliegend sind die beiden Lufteinlassöffnungen 44, 46 bereichsweise nach Art einer Düse 54, 56 ausgebildet. Dadurch wird eine verbesserte Luftführung erreicht, sodass eine Geräuschentwicklung reduziert und der Wirkungsgrad des Ventilators 48 verbessert werden kann.

FIG 4 zeigt eine vergrößerte Darstellung des Ventilators 48 gemäß FIG 3. Zu erkennen ist, dass das Luftrad 42 mittels einer Ventilatornabe 64 an das nicht-antriebsseitige Ende 22 der Läuferwelle angeflanscht ist. Dadurch ist es drehfest mit der Läuferwelle verbunden.

Das Luftrad 42 weist Paare von Luftschaufeln 38 auf, sodass zwei getrennte Luftförderbereiche entstehen, wobei jeweils einer der Luftförderbereiche einer der beiden Lufteinlassöffnungen 44, 46 zugeordnet ist. Die Luftschaufeln 38 sind über eine mittig liegende Schottwand 66 mit der Ventilatornabe 64 verbunden.

Aus FIG 4 ist ferner deutlich ersichtlich, dass die Lufteinlassöffnungen 44, 46 jeweils einen nach Art einer Düse ausgebildeten Bereich 54, 56 aufweisen. Diese Bereiche 54, 56 sind umlaufend in Bezug auf die Lufteinlassöffnungen 44, 46 ausgebildet.

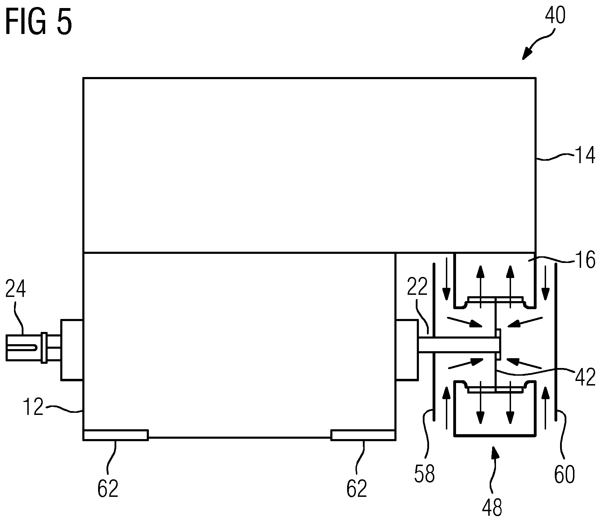

FIG 5 zeigt ein weiteres Ausführungsbeispiel, wobei diese Ausgestaltung auf der Ausgestaltung gemäß der FIG 3 und 4 basiert, weshalb ergänzend auf die diesbezüglichen Ausführungen verwiesen wird.

Die elektrische Maschine 40 gemäß FIG 5 umfasst ergänzend gegenüber der elektrischen Maschine 40 der FIG 3 und 4 in Strömungsrichtung vor den beiden Lufteinlassöffnungen 44, 46 jeweils eine Schalldämmwand 58, 60.

Die Schalldämmwände 58, 60 sind vorliegend als im Wesentlichen ebene Metallwände ausgebildet und überragen in ihren ebenen Abmessungen die Abmessungen der jeweiligen Lufteinlassöffnungen 44, 46. Dadurch kann eine weitere Geräuschreduktion erreicht werden.

Ein Abstand der Schalldämmwände 58, 60 gegenüber den jeweiligen Lufteinlassöffnungen 44, 46 ist jeweils derart gewählt, dass eine Beeinflussung der Luftströmung, insbesondere des Strömungswiderstands, im Wesentlichen vernachlässigt werden kann.

Die Schalldämmwände 48, 60 weisen lufteinlassseitig eine Schalldämmbeschichtung aus, die vorliegend durch ein Kunststoff-Schaummaterial gebildet ist. Alternativ oder ergänzend können jedoch auch andere Faserwerkstoffe zum Einsatz kommen, beispielsweise Steinwolle, Glaswolle, Stahlwolle, Kombinationen hiervon und/oder dergleichen.

Die Ausführungsbeispiele dienen lediglich der Erläuterung der Erfindung und sollen diese nicht beschränken. Natürlich können bezüglich der Merkmale Variationen vorgesehen sein, ohne den Grundgedanken der Erfindung zu verlassen. Der nach Art einer Düse ausgebildete Bereich braucht nicht vollständig umfänglich in Bezug auf die Lufteinlassöffnung ausgebildet zu sein. Es kann vorgesehen sein, dass auch lediglich ein Teil der Lufteinlassöffnung nach Art einer Düse ausgebildet ist. Darüber hinaus können natürlich weitere strömungstechnische Anpassungen im Bereich der Lufteinlassöffnungen im Rahmen der Erfindung vorgesehen sein.

## Patentansprüche

1. Elektrische Maschine (40) mit:
- einem Gehäuse (12),
- einem im Gehäuse (12) drehfest angeordneten Ständer,
- einem in einem Aufnahmeraum des Ständers drehbar gelagerten Läufer,
- einer Kühleinrichtung zum Abführen von Wärme aus dem Gehäuse (12) heraus, zu welchem Zweck die Kühleinrichtung maschinenseitig einen geschlossenen Kühlkreislauf für ein Kühlfluid bereitstellt,
- einem mit Kühlluft beaufschlagbaren Wärmeübertrager (14), der am Gehäuse (12) angeordnet und mit der Kühleinrichtung gekoppelt ist, wobei der Wärmeübertrager (14) ausgebildet ist, vom Kühlfluid durchströmt zu werden und eine stoffliche Trennung zwischen dem Kühlfluid und der Kühlluft im Wärmeübertrager (14) zu gewährleisten, indem die Kühlluft durch Kühlrohre des Wärmeübertragers (14) geführt wird und die Kühleinrichtung fluidisch mit dem Wärmeübertrager (14) gekoppelt ist,
- einem Kühlluftkanal (16) zum Zuführen und/oder Abführen der Kühlluft, und
- einem Ventilator (48) als Wellenventilator zum Einbringen der Kühlluft in den Kühlluftkanal (16), wobei der Ventilator (48) ein eigenes Ventilatorgehäuse (50) aufweist, in dem ein drehbar antreibbar gelagertes Luftrad (42) angeordnet ist, wobei das Ventilatorgehäuse (50) zwei gegenüberliegende Lufteinlassöffnungen (44,46), zwischen denen das Luftrad (42) angeordnet ist, und genau eine in einer radialen Richtung des Luftrads (42) angeordnete Luftauslassöffnung (52) aufweist, durch die die vom Ventilator (48) bereitgestellte Kühlluft in den Kühlluftkanal (16) gefördert wird,
**dadurch gekennzeichnet, dass**
der Ventilator (48) als zweiflutiger Ventilator ausgebildet ist, zu welchem Zweck das Luftrad (42) als zweiseitiges Radialluftrad ausgebildet ist, sodass durch beide der Lufteinlassöffnungen (44,46) entsprechend Kühlluft angesaugt und in den Kühlluftkanal (16) gefördert wird, und dass die Lufteinlassöffnungen (44, 46) als Düse (54,56) ausgebildet sind.

2. Elektrische Maschine nach Anspruch 1, **dadurch gekennzeichnet, dass** sich in Strömungsrichtung an den als Düse (54,56) ausgebildeten Bereich ein als Diffusor ausgebildeter Bereich anschließt.

3. Elektrische Maschine nach Anspruch 1 oder 2, **dadurch gekennzeichnet, dass** in Strömungsrichtung vor der wenigstens einen der beiden Lufteinlassöffnungen (44,46) eine Schalldämmwand (58,60) ausgebildet ist.

4. Elektrische Maschine nach Anspruch 3, **dadurch gekennzeichnet, dass** die Schalldämmwand (58, 60) zumindest lufteinlassöffnungsseitig ein Schalldämmmaterial aufweist.

## Claims

1. Electric machine (40) having:
- a housing (12),
- a stationary part which is arranged in a rotationally conjoint manner in the housing (12),
- a runner which is rotatably mounted in a receiving space of the stationary part,
- a cooling device for discharging heat from the housing (12), for which purpose the cooling device provides, on the machine side, a closed cooling circuit for a cooling fluid,
- a heat exchanger (14) which is able to be acted on by cooling air and which is arranged on the housing (12) and is coupled to the cooling device, wherein the heat exchanger (14) is designed to be flowed through by the cooling fluid, and to ensure a substance separation between the cooling fluid and the cooling air in the heat exchanger (14), in that the cooling air is guided through cooling tubes of the heat exchanger (14) and the cooling device is fluidically coupled to the heat exchanger (14),
- a cooling-air duct (16) for the supply and/or discharge of the cooling air, and
- a fan (48) as a shaft fan for introducing the cooling air into the cooling-air duct (16), wherein the fan (48) has a separate fan housing (50), in which a fan wheel (42) which is mounted so as to be drivable in rotation is arranged, wherein the fan housing (50) has two opposing air inlet openings (44, 46), between which the fan wheel (42) is arranged, and exactly one air outlet opening (52), which is arranged in a radial direction of the fan wheel (42) and through which the cooling air provided by the fan (48) is conveyed into the cooling-air duct (16),
**characterized in that**
the fan (48) is formed as a two-channel fan, for which purpose the fan wheel (42) is formed as a two-sided radial fan wheel, with the result that cooling air is correspondingly sucked in through both of the air inlet openings (44, 46) and conveyed into the cooling-air duct (16), and **in that** the air inlet openings (44, 46) are formed as a nozzle (54, 56).

2. Electric machine according to Claim 1, **characterized in that** the region formed as a nozzle (54, 56) is adjoined in the flow direction by a region formed as a diffuser.

3. Electric machine according to Claim 1 or 2, **characterized in that** a sound insulation wall (58, 60) is formed upstream of the at least one of the two air inlet openings (44, 46) in the flow direction.

4. Electric machine according to Claim 3, **characterized in that** the sound insulation wall (58, 60) has, at least on the air inlet opening side, a sound insulation material.

## Revendications

1. Machine (40) électrique, comprenant :
- une carcasse (12),
- un stator fixe en rotation de la carcasse (12),
- un rotor monté tournant dans un espace de réception du stator,
- un dispositif de refroidissement pour évacuer de la chaleur de la carcasse (12), en vu duquel le dispositif de refroidissement procure, du côté de la machine, un circuit de refroidissement fermé pour un fluide de refroidissement,
- un échangeur de chaleur (14), qui peut être alimenté en air de refroidissement, qui est monté sur la carcasse (12) et qui est couplé au dispositif de refroidissement, l'échangeur de chaleur (14) étant constitué pour être parcouru par du fluide de refroidissement et pour assurer une séparation de substances entre le fluide de refroidissement et l'air de refroidissement dans l'échangeur de chaleur (14), par le fait que l'air de refroidissement passe dans des tubes de refroidissement de l'échangeur de chaleur (14) et par le fait que le dispositif de refroidissement communique fluidiquement avec l'échangeur de chaleur (14),
- un conduit (16) pour de l'air de refroidissement pour envoyer et/ou évacuer l'air de refroidissement, et
- un ventilateur (48), sous la forme d'un ventilateur à ondes, pour envoyer l'air de refroidissement dans le conduit (16) pour de l'air de refroidissement, le ventilateur (48) ayant sa propre carcasse (50) de ventilateur, dans laquelle est disposée une roue (42) à air, montée tournante et de manière à pouvoir être entraînée, la carcasse (50) du ventilateur ayant deux ouvertures (44, 46) opposées d'entrée d'air, entre lesquelles est disposée la roue (42) à air, et exactement une ouverture (52) de sortie d'air, qui est disposée dans une direction radiale de la roue (42) à air et par laquelle l'air de refroidissement donné par le ventilateur (48) est refoulé dans le conduit (16) pour de l'air de refroidissement,
**caractérisé en ce que** le ventilateur (48) est constitué sous la forme d'un ventilateur à double flux, en vu duquel la roue (42) à air est constituée en roue à air radiale à deux côtés, de manière à aspirer de l'air de refroidissement correspondant par les deux ouvertures (44, 46) d'entrée d'air et à le refouler dans le conduit (16) pour de l'air de refroidissement, et **en ce que** les ouvertures (44, 46) d'entrée d'air sont constituées sous la forme de buses (54, 56).

2. Machine électrique suivant la revendication 1, caractérisé à ce qu'à la partie constituée sous la forme de buses (54, 56) fait suite, dans le sens de l'écoulement, une partie constituée en diffuseur.

3. Machine électrique suivant la revendication 1 ou 2, **caractérisé en ce que**, dans le sens de l'écoulement, avant la au moins une des deux ouvertures (44, 46) d'entrée d'air, est constituée une paroi (58, 60) d'isolation acoustique.

4. Machine électrique suivant la revendication 3, **caractérisé en ce que** la paroi (58, 60) faisant barrage au son a, au moins du côté de l'ouverture d'entrée d'air, un matériau d'isolation acoustique.
